# EUROPEAN PATENT SPECIFICATION

(11) **EP 2 434 471 B1**
(45) Date of publication and mention of the grant of the patent: **21.10.2015**
(21) Application number: 11174202.9
(22) Date of filing: 15.07.2011
(51) Int. Cl.: G09F 7/06, B29C 65/78, B29C 65/00

(54) **Method for mounting strings of alphanumeric characters or symbols on fabrics, and related string**
Verfahren zum Erzeugen einer Aneinanderreihung aus alphanumerischen Zeichen oder Symbolen auf Stoff und zugehörige Aneinanderreihung
Procédé pour la fixation d'une juxtapostion de caractères alphanumériques ou symboles sur des tissus et juxtapostion correspondante

(30) Priority: 27.09.2010 IT MI20101747
(43) Date of publication of application: 28.03.2012
(73) Proprietor: Metalbuttons S.p.A., 24060 Castelli Calepio (BG) (IT)
(72) Inventor: Mongodi, Sergio, 24060 Castelli Calepio (BG) (IT)
(74) Representative: Modiano, Micaela Nadia

(56) References cited:
- EP-A1- 2 151 169
- EP-A2- 2 276 015
- GB-A- 190 417 771
- US-A- 5 223 316
- US-A1- 2002 053 124

## Description

The present invention relates to a method for mounting strings of alphanumeric characters, symbols or the like on fabrics, particularly on fabrics and the like, and to the related string.

The technique of fixing to an item of clothing or, generally, to fabric strings of alphanumeric characters that represent words, trademarks, logos or, more generally, alphanumeric codes is widespread in the fashion field and in other fields.

Such alphanumeric codes typically consist of a set of letters, numerals and symbols made, according to the requirements, of metal or plastics and can be fixed to the fabric with several conventional methods.

If the string is constituted by a single rigid piece, such conventional methods can comprise fixing the entire string onto the fabric in a single operation, by way of known techniques, such as for example punching or riveting.

However, this mounting method suffers the drawback of eliminating locally the elasticity and flexibility of the fabric where the string has been fixed, since the string is a rigid element or is in any case less flexible than the fabric on which it is applied.

An alternative to this mounting method can be, for example, sewing or otherwise fixing one character at a time if the string is not in a single piece, so as to render the characters independent one another.

In this manner, the fabric keeps its elasticity and flexibility substantially unchanged.

However, this last solution is not devoid of drawbacks, which include the fact that fixing one character at a time on the fabric entails long mounting times, with the possibility to lose the alignment between one character and the other.

EPA 09165825.2 by the same Applicant discloses a method for mounting a string of characters that provides:
- a first step of positioning a string of alphanumeric characters, symbols or the like in low-relief on a first presser of a press,
- a second step of positioning a string of supporting elements on a second presser of said press that correspond to said alphanumeric characters, symbols or the like in low-relief,
- a third step of positioning a fabric onto which said alphanumeric characters, symbols or the like in low-relief are fixed between said first and second pressers,
- a press closing step for pressing said alphanumeric characters, symbols or the like in low-relief on said corresponding supporting elements with said fabric interposed for the mutual fixing of said alphanumeric characters, symbols or the like in low-relief with said corresponding supporting elements,
- a step for opening the press in order to extract said fabric from said press.

Both the string of characters and the string of corresponding supporting elements are held in position by a pair of longitudinal bars, which face each other and between which the characters (or supporting elements) are arranged. The characters are then connected to the bars by means of feet or wings which, once the string of characters has been mounted, are to be broken so as to separate the string of characters or supporting elements from the respective bars.

Although the solution described above overcomes all the drawbacks of the cited background art and thus allows to mount a whole string with mutually spaced characters, in a single mounting operation, the presence of the connecting feet between the characters and the bars and, to a lesser extent, between the supporting elements and the respective bars leaves, upon separation of the feet, more or less visible marks on the edge of the characters that compose the string.

In the case of the mounting of strings on high-quality items of clothing, the presence of such marks can be unacceptable and therefore the technical solution of the above cited patent application is found to be inadequate.

The aim of the present invention is to eliminate the drawbacks noted above by providing a method for mounting strings of alphanumeric characters, symbols or the like on fabrics and the like that allows the characters that define the string to be mounted in a single operation despite remaining mutually separate and independent, without thus altering the elastic characteristics of the fabric, and at the same time allows to eliminate any esthetically unpleasant mark at the characters caused by the separation of connecting feet between the characters and the bars that constitute the positioning means.

Within this aim, an object of the present invention is to provide a method that uses machines and equipment that are typical of the field.

Another object of the present invention is to provide a method for mounting strings of characters that allows an optimum alignment of the mounted characters.

Another object of the present invention is to provide a mounting method that is highly reliable, relatively simple to provide and at low cost.

This aim and these and other objects that will become better apparent hereinafter are achieved by a method for mounting strings of alphanumeric characters, symbols or the like on fabrics, comprising:
- a first step of positioning a string of alphanumeric characters, symbols or the like in low-relief on a first presser of a press,
- a second step of positioning a string of supporting elements on a second presser of said press which correspond to said alphanumeric characters, symbols or the like in low-relief,
- a third step of positioning a fabric onto which said alphanumeric characters, symbols or the like in low-relief are to be fixed between said first and second pressers,

- a press closing step for pressing said alphanumeric characters, symbols or the like in low-relief onto said corresponding supporting elements with said fabric interposed for the mutual fixing of said alphanumeric characters, symbols or the like in low-relief with said corresponding supporting elements,
- a press opening step for extracting said fabric from said press,
characterized in that said alphanumeric characters, symbols or the like are mounted beforehand in first positioning means, which define a plurality of mutually independent seats, one for each one of said alphanumeric characters, symbols or the like, said first positioning means being removable once the characters have been fixed, and in that second positioning means are provided, which define a plurality of mutually independent seats, one for each one of said supporting elements that correspond to said alphanumeric characters, symbols or the like, said second positioning means being removable once the characters have been fixed.

Further characteristics and advantages of the present invention will become apparent from the description of a preferred but not exclusive embodiment of a method for mounting strings of alphanumeric characters, symbols or the like on fabrics, according to the invention, illustrated by way of non-limiting example in the accompanying drawings, wherein:

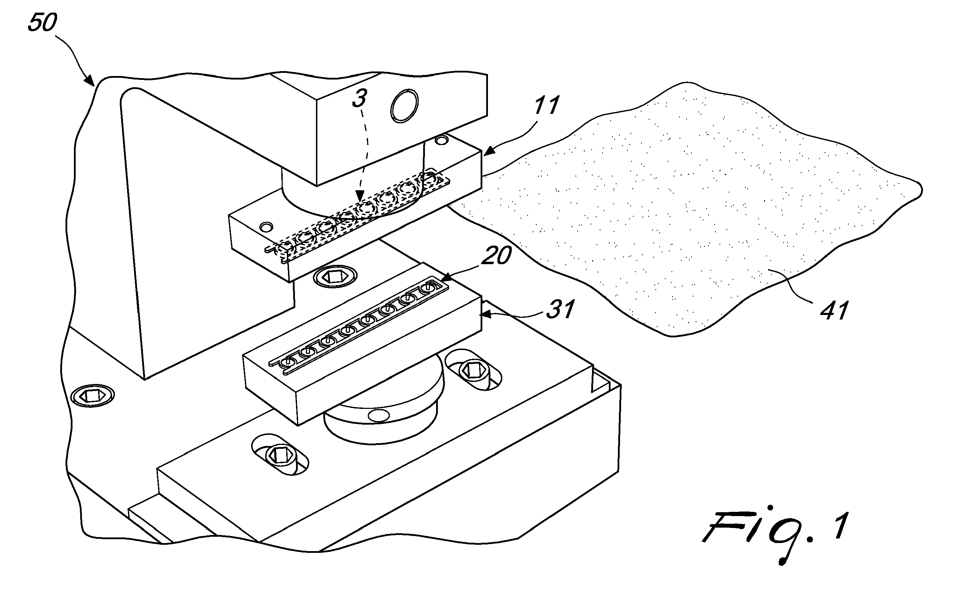

Figure 1 is a perspective view of a press for mounting a string of alphanumeric characters, symbols or the like in low-relief on a fabric, according to the present invention;

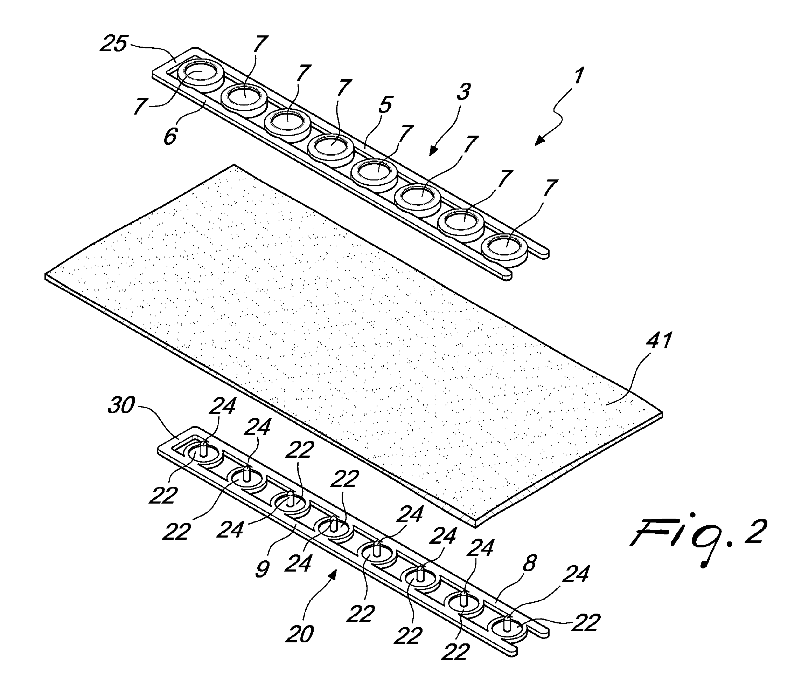

Figure 2 is an exploded perspective view of the string of characters according to the invention, with the corresponding fabric to which it is to be applied;

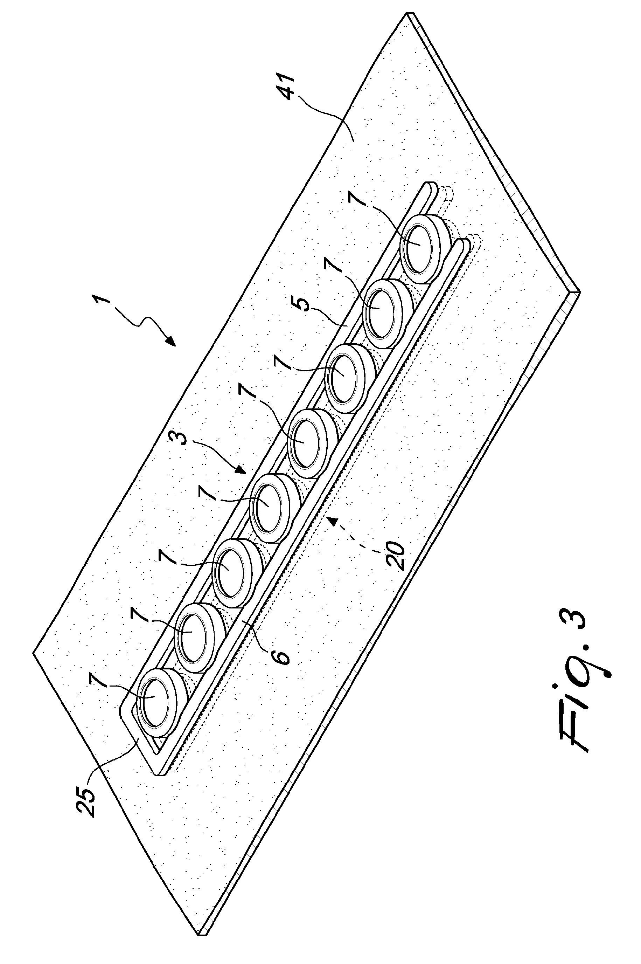

Figure 3 is a perspective view of the string of characters mounted on fabric;

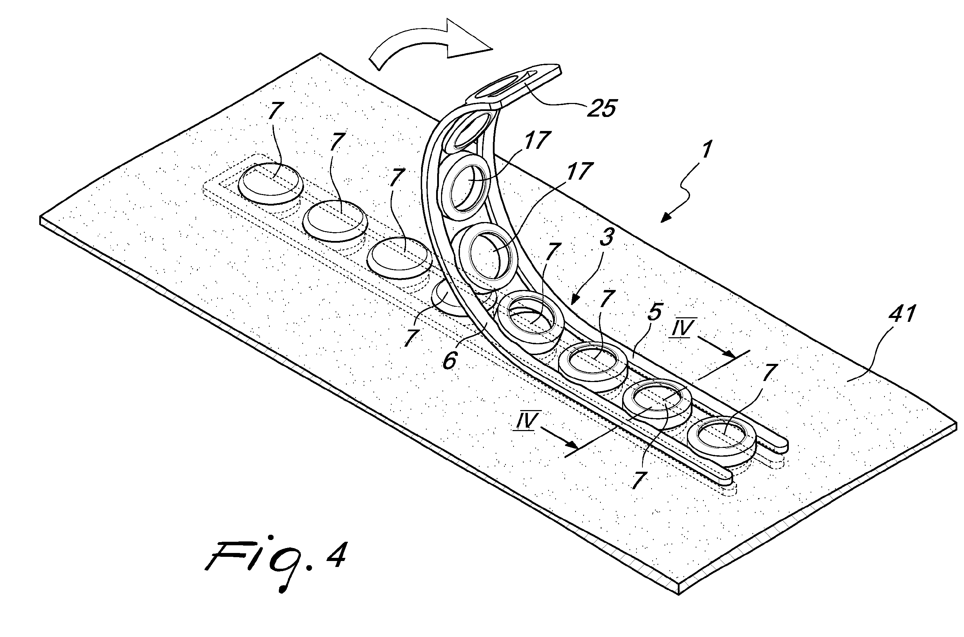

Figure 4 is a perspective view of the step of removal of the template of the string of characters mounted on fabric;

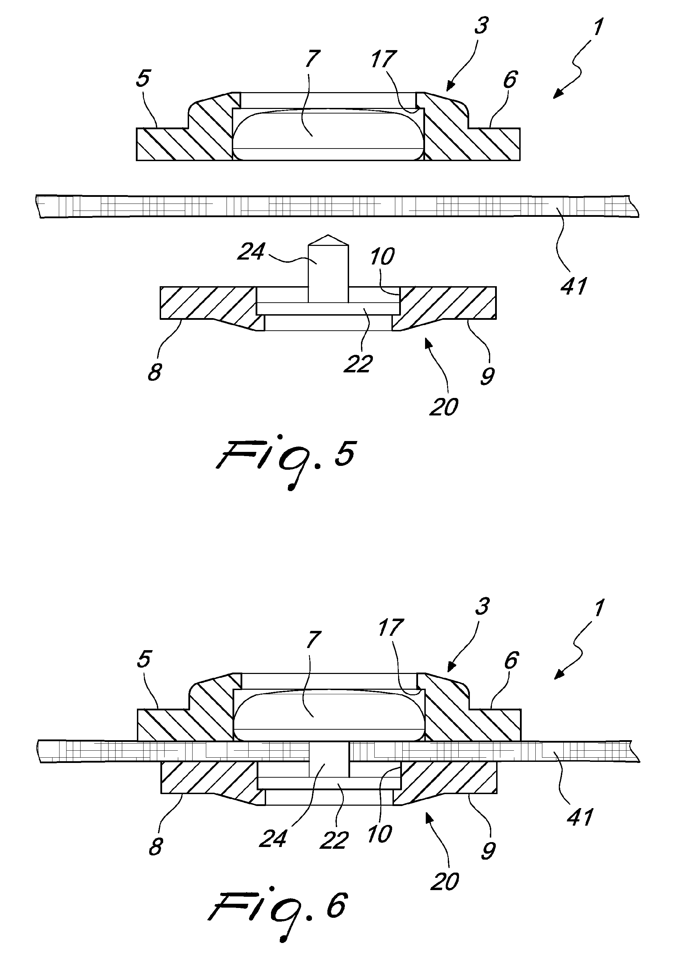

Figure 5 is a transverse sectional view of the string of characters according to the invention before mounting has been performed;
Figure 6 is a transverse sectional view of the string of characters according to the invention after mounting has been performed.

With reference to the figures, the method for mounting strings of alphanumeric characters, symbols or the like on fabrics comprises a first step of positioning a string 1 of alphanumeric characters, symbols or the like in low-relief on a first presser 11 of a press 50, which can, for example, be located on the striking mass of said press 50.

More precisely, the string 1 can be defined by a plurality of alphanumeric characters 7 which are molded and aligned according to a predefined layout and are held in position by first positioning means 3.

The first positioning means 3 are defined by a string mounting template, which is constituted by at least one first bar and preferably by a first bar 5 and a second bar 6, which are arranged so as to face each other and define a plurality of seats 17 for accommodating the characters 7 of the string.

The bars 5 and 6 are mutually connected not only by the seats 17 defined between the bars but also, at at least one of their ends, by a connecting bar 25.

The mounting template is conveniently made of plastics.

In this manner, the mounting template allows to accommodate therein the characters 7 of the string, keeping them mutually spaced but nonetheless aligned as desired, with the further advantage of not having connection elements between each character and any part of the mounting template.

After the string 1 has been positioned, one proceeds to the second step of positioning a string of supporting elements 22, which correspond to the alphanumeric characters 7. The supporting elements 22 are accommodated in second positioning means 20.

This second string of supporting elements 22 is positioned on a second presser 31 of the press 50, which can, for example, be placed on the anvil of the press 50.

More precisely, the second positioning means 20 are also defined by a mounting template for the string of supporting elements 22, which is constituted by at least one first bar and preferably by a first bar 8 and a second bar 9, which are arranged so as to face each other and define a plurality of seats 10 for accommodating the supporting elements 22 of the string.

The bars 8 and 9 are connected one another not only by the seats 10 defined between the bars but also, at at least one of their ends, by a connecting bar 30.

The mounting template 20 is conveniently made of plastics.

In this manner, the mounting template 20 allows to accommodate therein the supporting elements 22, which substantially correspond to the characters 7 of the string in terms of shape and size, keeping the supporting elements 22 mutually spaced, but nonetheless aligned as desired, with the further advantage of not having elements for connection between each supporting element 22 and any part of the mounting template 20.

The supporting elements 22 can be thus molded and aligned according to a layout that corresponds to the layout of the string 1 and the second presser 31 also has such a shape as to be able to accommodate the string of the supporting elements 22 accommodated in the mounting template 20.

It should be stressed that on the supporting elements 22 a plurality of pins 24 are provided for the forced insertion in holes defined at each character 7 of the string.

In particular, the characters of the string and the supporting elements are provided with complementary coupling means, so as to allow to couple each character to a corresponding supporting element.

The steps cited above do not have to be performed in a precise sequence with respect to each other: performing one or the other first, or performing them simultaneously, is the same.

Once the two strings 1 and 20 have been placed on the adapted pressers 11 and 31, it is possible to perform a third step for positioning a fabric 41 onto which the alphanumeric characters 7 are to be fixed.

The fabric 41 is thus placed between the first and second pressers 11 and 31 and held in position, even manually, while the press closing step is performed in order to press the alphanumeric characters 7 on the corresponding supporting elements 22, with the fabric 41 interposed, for their mutual fixing.

Thereafter, it is possible to perform a press opening step for extracting the fabric 41 from the press 50 and proceed with the third step of removal of the first positioning means 3 and of the second positioning means 20, i.e., of the two mounting templates.

More precisely, this last step consists in removing the mounting templates simply by lifting them and "tearing" them off, so as to leave the string characters on one side of the fabric and the corresponding supporting elements on the opposite side.

The removal of the mounting templates, which are not connected in any way to the characters of the string and to the corresponding supporting elements, allows to obtain the mounting of the characters of the string without said characters having marks due to the prior connection to the mounting template.

Both the characters 7 and the supporting elements 22 are in fact simply accommodated respectively in the seats 7 and 10 of the respective mounting templates 3 and 20.

In practice it has been found that the method for mounting strings of alphanumeric characters, symbols or the like on fabrics with the corresponding equipment required for the application of said method, according to the invention, fully achieve the intended aim and objects, since they allow to fix a string of alphanumeric characters, symbols or the like on a fabric according to a preset layout, keeping substantially unchanged the elastic and flexibility properties of the fabric, since at the end of the process the alphanumeric characters, symbols or the like are mutually disconnected.

In particular, the characters mounted on the fabric have no marks due to a previous connection to the bars or the seats of the corresponding mounting template.

Another advantage of the method according to the present invention is that it is possible to fix all the alphanumeric characters, symbols or the like simultaneously, using therefore an amount of time that is independent of the number of alphanumeric characters, symbols or the like to be fixed to the fabric.

A further advantage of the method according to the present invention is that it uses, for its execution, equipment that is commonly used in the field, with a consequent cost containment.

The method for mounting strings of alphanumeric characters, symbols or the like on fabrics with the corresponding equipment required for the application of said method, thus conceived, are susceptible of numerous modifications and variations, all of which are within the scope of the appended claims.

In practice, the materials used, so long as they are compatible with the specific use, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for mounting strings of alphanumeric characters, symbols on fabrics, comprising:
- a first step of positioning a string (1) of alphanumeric characters, symbols (7) on a first presser (11) of a press (50),
- a second step of positioning a string of supporting elements (22) on a second presser (31) of said press (50) which correspond to said alphanumeric characters, symbols (7),
- a third step of positioning a fabric (41) onto which said alphanumeric characters, symbols (7) are to be fixed between said first and second pressers (11, 31),
- a press closing step for pressing said alphanumeric characters, symbols onto said corresponding supporting elements (22) with said fabric (41) interposed for the mutual fixing of said alphanumeric characters, symbols (7) in with said corresponding supporting elements (22),
- a press opening step for extracting said fabric (41) from said press (50),
**characterized in that** said alphanumeric characters, symbols are mounted, before said first step, in first positioning means (3), which define a plurality of mutually independent seats (17), one for each one of said alphanumeric characters, symbols, said first positioning means being removable once the characters have been fixed, and **in that** second positioning means (20) are provided, which define a plurality of mutually independent seats (10), one for each one of said supporting elements (22) that correspond to said alphanumeric characters, symbols (7), said second positioning means being removable once the characters have been fixed.

2. The method according to claim 1, **characterized in that** it comprises a first step of preparing said string (1) of alphanumeric characters, symbols (7) for its positioning on said first presser (11), said first preparation step being performed before said first positioning step.

3. The method according to one or more of the preceding claims, **characterized in that** it comprises a third step of removing said first positioning means (3) and said second positioning means (20), said third removal step being performed after said press opening step.

4. A system comprising: a first mounting template and a string of alphanumeric characters, symbols, comprising a series of alphanumeric characters, symbols (7) provided with coupling means for their coupling to supporting elements provided with coupling means which are complementary to the coupling means of said alphanumeric characters, symbols, said alphanumeric characters, symbols (7) being held in position with respect to each other by said first mounting template (3), said first mounting template defining a plurality of mutually independent and separate seats, one for each one of said alphanumeric characters, symbols (7), said first mounting template (3) comprising at least one first positioning bar (5), to which said seats (17) are connected, said first mounting template being made of a single piece.

5. The system according to claim 4, **characterized in that** said first mounting template is made of plastics.

6. Asystem comprising a second mounting template and a string of supporting elements, said second mounting template (20) defining a plurality of seats (10) which are mutually independent and separate, one for each one of supporting elements (22) provided with coupling means for their coupling to alphanumeric characters or symbols (7) provided with coupling means which are complementary to the coupling means of said supporting elements (22) said second mounting template (20) comprising at least one first positioning bar (8) to which said seats (10) are connected, said second mounting template being made of a single piece.

7. The system according to claim 6, **characterized in that** said second mounting template is made of plastics.

## Patentansprüche

1. Ein Verfahren zum Auftragen von Ketten alphanumerischer Zeichen, Symbole auf Stoffe, das Folgendes umfasst:
- einen ersten Schritt der Positionierung einer Kette (1) alphanumerischer Zeichen, Symbole (7) auf einer ersten Druckvorrichtung (11) einer Presse (50),
- einen zweiten Schritt der Positionierung einer Kette tragender Elemente (22) auf einer zweiten Druckvorrichtung (31) der Presse (50), welche den alphanumerischen Zeichen, Symbolen (7) entsprechen,
- einen dritten Schritt der Positionierung eines Stoffs (41), auf dem die alphanumerischen Zeichen, Symbole (7) fixiert werden sollen, zwischen der ersten und der zweiten Druckvorrichtung (11, 31),
- einen Schritt des Schließens der Presse, um die alphanumerischen Zeichen, Symbole auf die entsprechenden tragenden Elemente (22) zu pressen, mit dem Stoff (41) dazwischen angeordnet, zur gegenseitigen Fixierung der alphanumerischen Zeichen, Symbole (7) und der entsprechenden tragenden Elemente (22),
- einen Schritt des Öffnens der Presse, um den Stoff (41) aus der Presse (50) zu nehmen,
**dadurch gekennzeichnet, dass** die alphanumerischen Zeichen, Symbole vor dem ersten Schritt in erste Positioniermittel (3) eingebaut werden, die eine Vielzahl voneinander unabhängiger Sitze (17) bestimmen, einen für jeden der alphanumerischen Zeichen, Symbole, wobei die ersten Positioniermittel entfernt werden können, sobald die Zeichen fixiert wurden, und dadurch, dass zweite Positioniermittel (20) bereitgestellt sind, die eine Vielzahl voneinander unabhängiger Sitze (10) bestimmen, einen für jedes der tragenden Elemente (22), die den alphanumerischen Zeichen, Symbolen (7) entsprechen, wobei die zweiten Positioniermittel entfernt werden können, sobald die Zeichen fixiert wurden.

2. Das Verfahren gemäß Anspruch 1, **dadurch gekennzeichnet, dass** es einen ersten Schritt der Vorbereitung der Kette (1) alphanumerischer Zeichen, Symbole (7) für ihre Positionierung auf der ersten Druckvorrichtung (11) umfasst, wobei der erste Vorbereitungsschritt vor dem ersten Positionierschritt durchgeführt wird.

3. Das Verfahren gemäß einem oder mehreren der obigen Ansprüche, **dadurch gekennzeichnet, dass** es einen dritten Schritt des Entfernens der ersten Positioniermittel (3) und der zweiten Positioniermittel (20) umfasst, wobei der dritte Schritt des Entfernens nach dem Schritt des Öffnens der Presse durchgeführt wird.

4. Ein System, das eine erste Montageschablone und eine Kette alphanumerischer Zeichen, Symbole, umfasst, die eine Reihe alphanumerischer Zeichen, Symbole (7) umfasst, ausgestattet mit Kopplungsmitteln zum Zwecke ihrer Kopplung mit tragenden Elementen, die mit Kopplungsmitteln ausgestattet sind, welche komplementär zu den Kopplungsmitteln der alphanumerischen Zeichen, Symbole, sind, wobei die alphanumerischen Zeichen, Symbole (7) von der ersten Montageschablone (3) zueinander in Position gehalten werden und die erste Montageschablone eine Vielzahl voneinander unabhängiger und separater Sitze bestimmt, einen für jedes der alphanumerischen Zeichen, Symbole (7), wobei die erste Montageschablone (3) mindestens eine erste Positionierleiste (5) umfasst, mit der die Sitze (17) verbunden sind, wobei die erste Montageschablone aus einem einzigen Stück besteht.

5. Das System gemäß Anspruch 4, **dadurch gekennzeichnet, dass** die erste Montageschablone aus Kunststoff besteht.

6. Ein System, das eine zweite Montageschablone und eine Kette von tragenden Elementen umfasst, wobei die zweite Montageschablone (20) eine Vielzahl von Sitzen (10) bestimmt, die voneinander unabhängig und separat sind, einen für jedes der tragenden Elemente (22) ausgestattet mit Kopplungsmitteln zum Zwecke ihrer Kopplung mit alphanumerischen Zeichen oder Symbolen (7) ausgestattet mit Kopplungsmitteln, die komplementär zu den Kopplungsmitteln der tragenden Elemente (22) sind, wobei die zweite Montageschablone (20) mindestens eine erste Positionierleiste (8) umfasst, mit der die Sitze (10) verbunden sind, wobei die zweite Montageschablone aus einem einzigen Stück besteht.

7. Das System gemäß Anspruch 6, **dadurch gekennzeichnet, dass** die zweite Montageschablone aus Kunststoff besteht.

## Revendications

1. Procédé pour monter des chaînes de caractères alphanumériques ou de symboles sur des tissus, comprenant :
- une première étape de positionnement d'une chaîne (1) de caractères alphanumériques ou de symboles (7) sur un premier dispositif de pressage (11) d'une presse (50),
- une deuxième étape de positionnement d'une chaîne d'éléments de support (22) sur un deuxième dispositif de pressage (31) de ladite presse (50), ceux-ci correspondant auxdits caractères alphanumériques ou symboles (7),
- une troisième étape de positionnement d'un tissu (41) sur lequel lesdits caractères alphanumériques ou symboles (7) doivent être fixés entre lesdits premier et deuxième dispositifs de pressage (11, 31),
- une étape de fermeture de presse pour presser lesdits caractères alphanumériques ou symboles sur lesdits éléments de support correspondants (22) avec ledit tissu (41) qui est interposé pour la fixation mutuelle desdits caractères alphanumériques ou symboles (7) avec lesdits éléments de support correspondants (22),
- une étape d'ouverture de presse pour extraire ledit tissu (41) de ladite presse (50),
**caractérisé en ce que** lesdits caractères alphanumériques ou symboles sont montés, avant ladite première étape, dans des premiers moyens de positionnement (3), ceux-ci définissant une pluralité de sièges mutuellement indépendants (17), à raison d'un pour chacun desdits caractères alphanumériques ou symboles, lesdits premiers moyens de positionnement étant amovibles une fois que les caractères ont été fixés, et **en ce que** des deuxièmes moyens de positionnement (20) sont prévus, ceux-ci définissant une pluralité de sièges mutuellement indépendants (10), à raison d'un pour chacun desdits éléments de support (22) qui correspondent auxdits caractères alphanumériques ou symboles (7), lesdits deuxièmes moyens de positionnement étant amovibles une fois que les caractères ont été fixés.

2. Procédé selon la revendication 1, **caractérisé en ce qu'**il comprend une première étape de préparation de ladite chaîne (1) de caractères alphanumériques ou de symboles (7) pour son positionnement sur ledit premier dispositif de pressage (11), ladite première étape de préparation étant effectuée avant ladite première étape de positionnement.

3. Procédé selon l'une ou plusieurs des revendications précédentes, **caractérisé en ce qu'**il comprend une troisième étape de retrait desdits premiers moyens de positionnement (3) et desdits deuxièmes moyens de positionnement (20), ladite troisième étape de retrait étant effectuée après ladite étape d'ouverture de presse.

4. Système, comprenant un premier gabarit de montage et une chaîne de caractères alphanumériques ou de symboles, comprenant une série de caractères alphanumériques ou de symboles (7), munis de moyens de couplage pour leur couplage à des éléments de support, munis de moyens de couplage qui sont complémentaires aux moyens de couplages desdits caractères alphanumériques ou symboles, lesdits caractères alphanumériques ou symboles (7) étant maintenus en position les uns par rapport aux autres par ledit premier gabarit de montage (3), ledit premier gabarit de montage définissant une pluralité de sièges mutuellement indépendants et séparés, à raison d'un pour chacun desdits caractères alphanumériques ou symboles (7), ledit premier gabarit de montage (3) comprenant au moins une première barre de positionnement (5) à laquelle sont reliés lesdits sièges (17), ledit premier gabarit de montage étant réalisé d'un seul tenant.

5. Système selon la revendication 4, **caractérisé en ce que** ledit premier gabarit de montage est réalisé en matière plastique.

6. Système, comprenant un deuxième gabarit de montage et une chaîne d'éléments de support, ledit deuxième gabarit de montage (20) définissant une pluralité de sièges (10) qui sont mutuellement indépendants et séparés, à raison d'un pour chacun d'éléments de support (22), munis de moyens de couplage pour leur couplage à des caractères alphanumériques ou à des symboles (7), munis de moyens de couplage qui sont complémentaires aux moyens de couplage desdits éléments de support (22), ledit deuxième gabarit de montage (20) comprenant au moins une première barre de positionnement (8) à laquelle sont reliés lesdits sièges (10), ledit deuxième gabarit de montage étant réalisé d'un seul tenant.

7. Système selon la revendication 6, **caractérisé en ce que** ledit deuxième gabarit de montage est réalisé en matière plastique.
